(19) Europäisches Patentamt / European Patent Office / Office européen des brevets

(11) **EP 1 417 777 B1**

(12) **FASCICULE DE BREVET EUROPEEN**

(45) Date de publication et mention
de la délivrance du brevet:
**03.11.2010 Bulletin 2010/44**

(21) Numéro de dépôt: **02767337.5**

(22) Date de dépôt: **06.08.2002**

(51) Int Cl.:
***H04B 5/00*** *(2006.01)*     ***G07C 9/00*** *(2006.01)*

(86) Numéro de dépôt international:
**PCT/EP2002/008808**

(87) Numéro de publication internationale:
**WO 2003/015308 (20.02.2003 Gazette 2003/08)**

(54) **RECEPTEUR PORTABLE A DEUX ANTENNES**

TRAGBARER EMPFÄNGER MIT ZWEI ANTENNEN

PORTABLE RECEIVER WITH TWO ANTENNAE

(84) Etats contractants désignés:
**CH DE FR GB IT LI**

(30) Priorité: **06.08.2001 EP 01202999**
**02.10.2001 EP 01203712**

(43) Date de publication de la demande:
**12.05.2004 Bulletin 2004/20**

(73) Titulaire: **EM Microelectronic-Marin SA**
**2074 Marin (CH)**

(72) Inventeur: **LAMOTHE, Christian**
**CH-2000 Neuchâtel (CH)**

(74) Mandataire: **Vigand, Philippe**
**ICB**
**Ingénieurs Conseils en Brevets SA**
**Faubourg de l'Hôpital 3**
**2001 Neuchâtel (CH)**

(56) Documents cités:
**EP-A- 1 043 843**     **WO-A-98/07244**
**FR-A- 2 784 524**

**Description**

La présente invention concerne un récepteur portable à deux antennes utilisé notamment dans le domaine des systèmes de sécurité pour véhicule automobile.

Le récepteur portable comprend deux antennes qui sont agencées pour recevoir un signal électromagnétique extérieur dans une plage de fréquence donnée, et qui sont orientées suivant des axes sensiblement orthogonaux. Le récepteur comprend également deux circuits déphaseurs connectés chacun à une antenne, et des moyens de multiplexage auxquels sont connectés en entrée lesdits circuits déphaseurs et en sortie une unité réceptrice recevant le signal électromagnétique extérieur déphasé.

Un récepteur portable tel que défini au paragraphe précédent est connu du document FR 2 792 129. Ce document décrit un récepteur portable utilisable notamment dans un système antivol pour véhicule automobile. Dans ce cas, le récepteur est incorporé dans un support de type carte à puce, badge ou clé, appelé par la suite « identifiant » porté par le propriétaire du véhicule ou par une personne autorisée. Le support peut comporter également un émetteur, ce qui permet d'établir un dialogue du type émission-réception entre le véhicule muni du système antivol, appelé ci-après « unité d'identification », et la personne munie de l'identifiant.

Si le protocole d'accord entre l'unité d'identification et l'identifiant est respecté, un signal d'autorisation émis par l'unité d'identification permet d'activer des commandes, comme par exemple le verrouillage/déverrouillage des serrures ou encore le décodage d'un système d'anti-démarrage.

Le problème que cherche à résoudre ce document est celui posé par l'homogénéité de la réception des signaux par un identifiant placé dans un champ électromagnétique émis par l'antenne de l'émetteur-récepteur de l'unité d'identification. Autrement dit, le signal reçu par le récepteur de l'identifiant doit avoir une amplitude aussi grande et constante que possible quelle que soit l'orientation de l'identifiant à une distance donnée de l'unité d'identification.

L'approche consistant à utiliser un « champ tournant » que ce soit au niveau émission, c'est-à-dire au niveau de l'unité d'identification, ou que ce soit au niveau réception, c'est-à-dire au niveau de l'identifiant, est amplement décrite dans l'introduction du document FR 2 792 129, qui montre bien les difficultés d'une telle approche.

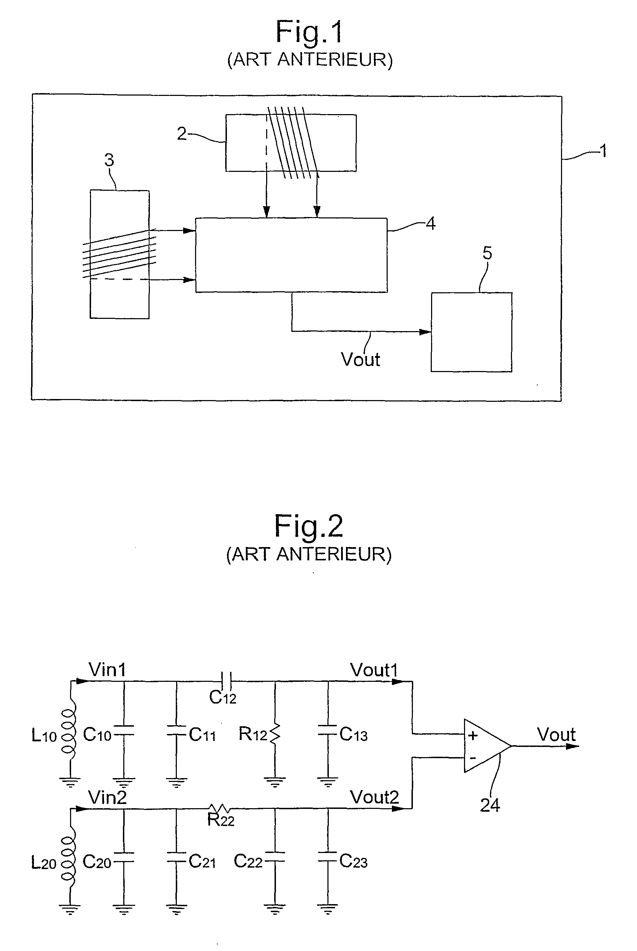

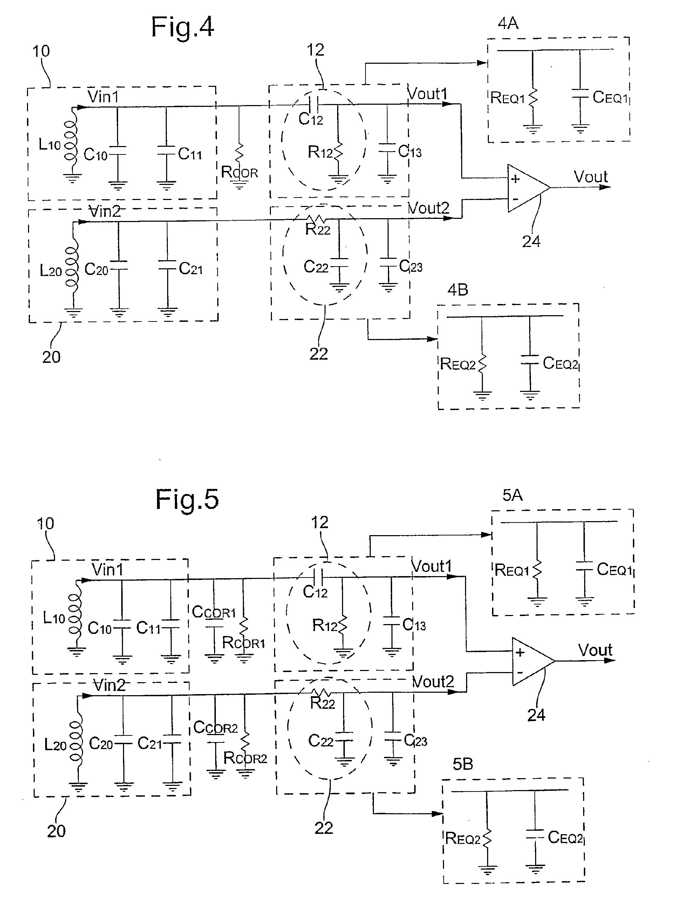

La figure 1 représente un récepteur portable 1 pouvant être incorporé dans un identifiant, comme par exemple une carte à puce, une clé ou un badge. Le récepteur 1 est muni de deux antennes 2 et 3, chacune des antennes étant réalisée sous la forme d'une bobine qui de préférence est bobinée sur un noyau en ferrite. Les deux antennes 2 et 3 sont disposées perpendiculairement, l'une par rapport à l'autre. Elles sont reliées à un circuit électrique 4, permettant de déphaser le signal délivré par les antennes. En sortie de ce circuit 4, un signal Vout est fourni à une unité réceptrice 5, généralement composée par un circuit intégré programmé adéquatement. Le circuit 4 sera détaillé dans le cadre de l'art antérieur à la figure 2, et dans le cadre de l'invention aux figures 4, 5 et 7.

Il est à noter que le récepteur portable peut être également équipé d'une unité émettrice non représentée, lui permettant de répondre activement à l'unité d'identification, par exemple un véhicule automobile.

La solution proposée par le document susmentionné incorpore entre les antennes réceptrices et l'unité réceptrice du récepteur portable, des moyens pour produire un déphasage temporel entre les signaux extérieurs reçus par lesdites antennes, correspondant au circuit 4 de la figure 1.

Cette solution met en avant l'obtention d'un déphasage correspondant à un angle de $(n-1)*\pi/n$ à la fréquence du signal à recevoir, n étant le nombre des antennes. Dans le cas particulier où le récepteur comprend deux antennes, le déphasage est donc de 90°. Pour cela, il est spécifié que chaque antenne est reliée à un circuit déphaseur permettant de déphaser respectivement de +45° et -45° les signaux délivrés par les antennes. Le mode de réalisation proposé pour les deux circuits déphaseur comprend un circuit RC et un circuit CR. Les deux circuits ensemble devraient selon ce document permettre d'obtenir le déphasage de 90° souhaité. Le choix d'un tel déphasage s'explique par le fait que la différence entre les deux signaux déphasés par les circuits RC et CR ne s'annulent jamais.

L'inconvénient majeur de cette solution provient du fait que la réalisation du circuit tel que décrit ne permet pas d'obtenir le déphasage souhaité et par là même n'assure plus la stabilité en amplitude recherchée. En effet, le montage proposé ne tient ni compte du soustracteur placé en sortie des circuits déphaseurs, ni des caractéristiques propres des antennes.

La figure 2 est une représentation de la solution susmentionnée incluant les éléments parasites, non négligeables, du soustracteur et des antennes. Les antennes sont réalisées sous la forme de bobines L10 et L20 ayant une capacité parasite représentée respectivement par les condensateurs C10 et C20, auxquels peuvent être ajoutés des condensateurs d'accord C11 et C21, les antennes étant accordées sur la fréquence du signal à recevoir. Chaque bobine L10, L20, est reliée à un circuit déphaseur, la bobine L10 étant reliée au circuit CR formé par le condensateur C12 et la résistance R12, et la bobine L20 étant reliée au circuit RC formé par la résistance R22 et le condensateur C22.

En sortie des circuits déphaseurs, les condensateurs C13 et C23 représentent les capacités parasites des entrées du soustracteur 24. Les signaux Vout1 et Vout2 récupérés en sortie des deux circuits déphaseurs sont soustraits dans le soustracteur 24, qui délivre un signal Vout déphasé théoriquement de 90° par rapport aux signaux d'entrée Vin1 et Vin2 délivrés par les bobines L10 et L20.

Une des causes du disfonctionnement du circuit proposé par le document FR 2 792 129 provient de ce que les capacités parasites C13 et C23, qui sont parfois négligeables, sont dans le cadre de cette application du même ordre de grandeur que les capacités utilisées pour réaliser les circuits déphaseurs CR et RC. Dans le cadre de la présente invention, on a mis en évidence que cela est une des raisons pour lesquelles le déphasage des deux circuits déphaseurs n'est pas de +45° et -45°, et que le déphasage des deux signaux en entrée du soustracteur 24, l'un par rapport à l'autre, n'est pas de 90°.

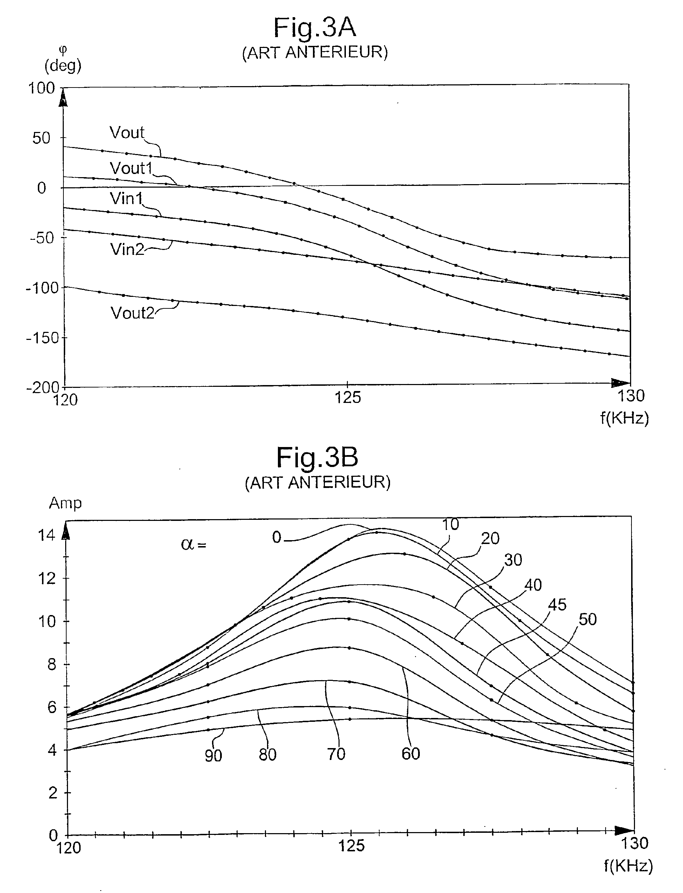

La figure 3A est une simulation du fonctionnement du circuit selon l'art antérieur représentant l'évolution du déphasage entre les signaux délivrés en sortie des bobines, Vin1 et Vin2, les signaux Vout1 et Vout2 fournis en entrée du soustracteur et le signal Vout délivré en sortie du soustracteur. La fréquence généralement utilisée pour ce type d'application est de 125 KHz, c'est pourquoi la simulation a été faite dans une fourchette de fréquence allant de 120 à 130 KHz.

Initialement les antennes reçoivent le même signal émis par l'antenne émettrice de l'unité d'identification. Les deux antennes étant choisies identiques, on pourrait s'attendre à ce que les signaux Vin1 et Vin2 délivrés en sortie des bobines soient identiques. Cependant, il n'en est pas ainsi, car les capacités parasites en entrée du soustracteur ont une influence non négligeable. Dans le cadre de la présente invention, on a remarqué que ces capacités parasites introduisent une dissymétrie entre les circuits équivalents des deux circuits déphaseurs. Il en résulte que les déphasages souhaités (+45° et -45°) en sortie des circuits déphaseurs ne sont pas obtenus, ainsi que le déphasage global (90°) entre les signaux Vout1 et Vout2.

L'erreur de déphasage due aux éléments parasites, a également une influence sur l'homogénéité de l'amplitude du signal Vout. La figure 3B est une simulation du fonctionnement selon l'art antérieur, représentant l'évolution de l'amplitude du signal de sortie Vout en fonction de l'angle entre le signal émis par l'unité d'identification et les antennes de l'identifiant.

Les angles choisis sont pris avec un pas de 10° entre 0 et 90°. On note que l'amplitude du signal Vout de sortie varie de manière importante, suivant l'angle de réception du signal émis par l'unité d'identification. Les variations d'amplitude, dans le cadre de cet exemple, peuvent dépasser un facteur trois.

Il est important de rappeler que l'objectif d'un tel circuit est avant tout d'obtenir un signal Vout ayant une amplitude la plus constante possible afin d'assurer une qualité de réception constante quelle que soit la position de l'identifiant par rapport à l'unité d'identification.

Une solution envisageable pour l'homme du métier serait d'inclure la capacité parasite C23 dans la détermination de la capacité C22 du circuit déphaseur RC. En effet, comme les valeurs des capacités connectées en parallèle s'ajoutent, il suffit de diminuer la valeur de la capacité C22 de la valeur de la capacité parasite C23. L'inconvénient d'une telle solution vient de ce qu'elle n'est pas applicable à l'autre circuit déphaseur CR. En effet, il n'est pas possible d'inclure la capacité parasite C13 dans le circuit déphaseur CR, car c'est la résistance R12 qui se trouve en parallèle de la capacité C13. Le problème rencontré dans le document FR 2 792 129, à savoir un déséquilibre entre les circuits équivalents de chacun des circuits déphaseurs, ne serait pas résolu. De fait, cette manière de procéder, loin d'améliorer le fonctionnement du récepteur le rend encore moins viable que le précédent.

Les solutions de l'art antérieur, notamment celle du document FR 2 792 129, ne tiennent pas compte, ou de manière non correcte, des éléments parasites du circuit global.

Il est important de noter que les solutions de l'art antérieur ne prévoient pas le cas où les antennes du récepteur seraient distinctes, cas qui est compris dans la solution selon l'invention.

La présente invention se propose donc de palier les inconvénients susmentionnés en fournissant un récepteur portable présentant un déphasage de 90° et une amplitude semblable entré les signaux fournis en entrée des moyens de multiplexage pour pouvoir fournir un signal de sortie ayant une amplitude sensiblement constante quel que soit l'angle de réception du signal reçu par ce récepteur portable.

A cet effet, le récepteur portable selon l'invention, en plus de ce qu'il satisfait à la définition donnée en introduction de la description, est **caractérisé en ce qu'**entre au moins un des circuits déphaseurs et l'antenne connectée à ce circuit, il comprend en outre des moyens de correction qui comprennent une résistance de correction permettant d'équilibrer lesdites résistances équivalentes desdits circuits équivalents, permettant d'équilibrer les fonctions de transfert et de chacun des sous-circuits comprenant les circuits déphaseurs.

Le circuit selon l'invention est fonctionnel en ce qu'il tient compte à la fois des éléments parasites des moyens de multiplexage et des éléments parasites de l'antenne. Si l'on cherche à isoler les problèmes, ceux liés à la sortie et ceux liés à l'entrée, le circuit global semble ne présenter aucun disfonctionnement notoire. Pourtant, le circuit global selon l'art antérieur ne fonctionne pas de manière efficace. En effet, c'est l'influence des éléments parasites des moyens de multiplexage sur le reste du circuit et notamment sur le réglage de l'antenne qui entraîne le disfonctionnement observé.

Selon un mode de réalisation avantageux de l'invention, les moyens de correction comprennent une résistance de correction tenant compte de la résistance interne de l'antenne et de la résistance équivalente des moyens de déphasage et des moyens de multiplexage. Les moyens de correction peuvent en outre comprendre un condensateur de correction tenant compte de la capacité interne de l'antenne et de la capacité équivalente du circuit déphaseur correspondant et des moyens de multiplexage.

Dans le cas présent comprenant deux antennes et où des moyens de correction sont placés entre chacune des deux antennes et des deux circuits déphaseurs, lesdites deux résistances de correction sont données selon la formule suivante Rcor = (Rant * Req) / ( Req - Rant), où Rant est la résistance interne de l'antenne correspondante, où Req est la résistance équivalente du circuit déphaseur correspondant, Req étant supérieur ou égal à Rant et les capacités des deux condensateurs de correction sont données par la formule suivante Ccor = Cant - Ceq, où Cant est la capacité interne de l'antenne correspondante et où Ceq est la capacité équivalente du circuit déphaseur correspondant et de l'entrée correspondante des moyens de multiplexage, Cant étant supérieur ou égal à Ceq.

D'autres caractéristiques et avantages de la présente invention apparaîtront dans la description suivante, donnée à titre d'exemple non limitatif et faite en référence aux dessins annexés, dans lesquels :

La figure 1, déjà décrite, est une représentation globale d'un récepteur portable équipé de deux antennes ;

La figure 2, déjà décrite, est un schéma électrique des moyens de déphasage utilisés dans un récepteur portable, incluant les éléments parasites non négligeables, selon l'art antérieur ;

La figure 3A, déjà décrite, est une simulation du fonctionnement du circuit selon l'art antérieur représentant l'évolution du déphasage entre les différents signaux;

La figure 3B, déjà décrite, est une simulation du fonctionnement selon l'art antérieur, représentant l'évolution de l'amplitude du signal de sortie en fonction de l'angle entre le signal émis par l'unité d'identification et les antennes de l'identifiant ;

La figure 4 est un schéma électrique de l'invention selon un premier mode de réalisation;

Les figures 4A et 4B représentent des blocs équivalents à certains blocs de la figure 4 ;

La figure 5 est un schéma électrique de l'invention selon un deuxième mode de réalisation;

Les figures 5A et 5B représentent des blocs équivalents à certains blocs de la figure 5 ;

La figure 6A est une simulation du fonctionnement du circuit selon le premier mode de réalisation de la figure 4, représentant l'évolution du déphasage entre les différents signaux ;

La figure6B est une simulation du fonctionnement du circuit selon le premier mode de réalisation de la figure 4, représentant l'évolution de l'amplitude du signal de sortie en fonction de l'angle entre le signal émis par l'unité d'identification et les antennes de l'identifiant ;

La figure 7 est un schéma électrique de l'invention selon un troisième mode de réalisation, incluant des moyens de linéarisation des moyens de multiplexage.

La figure 4 représente en détail le circuit 4 de la figure 1, selon un premier mode de réalisation de l'invention, dans le cas d'un récepteur muni de deux antennes identiques, des moyens de correction étant placés entre une antenne et un circuit déphaseur.

Les deux antennes 10 et 20 sont représentées respectivement par une bobine L10, un condensateur propre C10 et un condensateur d'accord C11, et par une bobine L20, un condensateur propre C20 et un condensateur d'accord C21. Les deux antennes 10 et 20 reçoivent un signal électromagnétique Vin, non représenté, extérieur au récepteur portable, émis par l'unité d'identification. Les bobines L10 et L20 délivrent en sortie des signaux respectivement Vin1 et Vin2. Ces deux signaux Vin1 et Vin2 sont respectivement fournis à un premier circuit déphaseur 12 et à un deuxième circuit déphaseur 22.

Le premier circuit déphaseur 12 est constitué d'un condensateur C12, dont une première armature est connectée à la sortie de l'antenne 10, et la deuxième armature est connectée à une première entrée de moyens de multiplexage 24, par exemple un soustracteur, et d'une résistance R12 connectée entre la deuxième armature du condensateur C12 et la masse.

Le deuxième circuit déphaseur 22 est constitué d'une résistance R22 connectée entre la sortie de l'antenne 20 et une deuxième entrée du soustracteur 24, et d'un condensateur C22 dont une première armature est connectée à la deuxième entrée du soustracteur 24, la deuxième armature étant connectée à la masse. Les éléments des deux circuits déphaseurs sont choisis de manière à obtenir le déphasage souhaité à la fréquence de réception, par exemple 125 KHz.

Les circuits déphaseurs 12 et 22 fournissent en sortie, aux première et deuxième entrées du soustracteur 24, des signaux Vout1 et Vout2 déphasés par rapport aux signaux Vin1 et Vin2 reçus en entrée desdits circuits déphaseurs. Le soustracteur 24 n'étant pas un élément idéal, il est nécessaire d'inclure à chacune de ses entrées un condensateur parasite noté respectivement, C13 et C23. En sortie, le soustracteur 24 délivre un signal Vout = Vout1 - Vout2.

Il est à noter que le soustracteur 24 placé en sortie peut être remplacé par un additionneur.

Un des buts de l'invention est de réaliser un circuit permettant d'obtenir un signal de sortie Vout ayant une amplitude sensiblement constante. Pour cela, il est nécessaire que les signaux Vout1 et Vout2 soient déphasés de 90° et ceci avec une amplitude égale.

L'amplitude et la phase de ces signaux sont déterminables par le calcul de la fonction de transfert (Vout1/Vin1 et Vout2/Vin2) de chacun des sous-circuits contenant les circuits déphaseurs. Pour calculer ces deux fonctions de transfert, on transforme chaque circuit déphaseur associé à la capacité parasite du soustracteur en un circuit équivalent RC parallèle, comme représenté aux figures 4A et 4B.

Le circuit déphaseur 12 et le condensateur C13 peuvent être remplacés par un circuit équivalent constitué d'une résistance équivalente Req1 et d'un condensateur équivalent Ceq1 en parallèle, comme représentés à la figure 4A.

Le circuit déphaseur 22 et le condensateur C23 peuvent être remplacés par un circuit équivalent constitué d'une résistance équivalente Req2 et d'un condensateur équivalent Ceq2 en parallèle, comme représentés à la figure 4B.

Il apparaît alors que les résistances équivalentes Req1 et Req2 sont nettement distinctes, et que les capacités des condensateurs équivalents Ceq1 et Ceq2 sont également distinctes.

Le déséquilibre entre les résistances équivalentes Req1 et Req2 est préjudiciable au niveau de l'amplitude et du déphasage du signal de sortie. En effet, l'amplitude des signaux de sortie Vout1 et Vout2 est donnée par le module des fonctions de transfert (Vout1/Vin1 et Vout2Nin2) qui dépend de la résistance équivalente correspondante (Req1 et Req2). De même, le déphasage entre les signaux de sortie Vout1 et Vout2, et les signaux d'entrée respectivement, Vin1 et Vin2, est donné par l'argument des fonctions de transfert qui dépend de la résistance équivalente correspondante (Req1 et Req2).

C'est pourquoi, il est nécessaire de corriger les deux antennes en fonction du circuit équivalent respectif, ou l'une des deux antennes en fonction des deux circuits équivalents.

Afin de corriger les deux antennes, ou l'une par rapport à l'autre, des moyens de correction sont prévus entre au moins une antenne et le circuit déphaseur correspondant. Ces moyens de correction sont constitués, selon ce premier mode, par une résistance de correction Rcor connectée entre la sortie de l'antenne 10 et la masse. Cette résistance de correction Rcor a pour but d'équilibrer les résistances équivalentes Req1 et Req2.

Il est important de noter que l'une des fonctions de transfert est réelle et que l'autre est imaginaire. Ainsi, une fois les deux fonctions de transfert équilibrées par la détermination de la résistance de correction Rcor, on a un déphasage constant de 90° entre les deux signaux Vout1 et Vout2, ainsi qu'une amplitude constante des signaux Vout1 et Vout2 ne dépendant plus de l'angle de réception du signal reçu. Ainsi, le signal Vout de sortie est déphasé de 90° par rapport aux signaux d'entrée Vin1 et Vin2, avec une amplitude constante quel que soit l'angle de réception.

Selon une variante non représentée de ce premier mode de réalisation, les moyens de correction comprennent en outre un condensateur de correction Ccor permettant d'équilibrer les capacités équivalentes Ceq1 et Ceq2.

La figure 5 est un schéma électrique de l'invention selon un deuxième mode de réalisation. Les références numériques utilisées à la figure 4 ont été gardées pour les éléments correspondants de la figure 5.

Selon ce deuxième mode de réalisation de l'invention, les moyens de correction comportent de préférence une résistance de correction et un condensateur de correction pour corriger chaque antenne.

Les moyens de correction (Rcor1 et Ccor1) placés en sortie de la première antenne 10 sont constitués par une résistance de correction Rcor1 connectée entre la sortie de l'antenne 10 et la masse et par un condensateur de correction Ccor1 connecté en parallèle de la résistance de correction Rcor1.

Les moyens de correction (Rcor2 et Ccor2) placés en sortie de la deuxième antenne 20 sont constitués par une résistance de correction Rcor2 connectée entre la sortie de l'antenne 20 et la masse et par un condensateur de correction Ccor2 connecté en parallèle de la résistance de correction Rcor2.

Les résistances de correction Rcor1 et Rcor2 ont pour but d'équilibrer les résistances équivalentes Req1 et Req2. Les condensateurs de correction Ccor1 et Ccor2 ont pour but d'équilibrer les capacités Ceq1 et Ceq2.

Ces éléments de correction sont donnés par les formules suivantes :

$$Rcor = (Req \times Rant) / (Req - Rant)$$

où Rant est la résistance d'accord de l'antenne correspondante, et Req est la résistance équivalente du circuit déphaseur correspondant et des moyens de multiplexage, Req étant supérieur ou égal à Rant ;

$$Ccor = Cant - Ceq$$

où Cant est la capacité d'accord de l'antenne correspondante et où Ceq est la capacité équivalente du circuit déphaseur correspondant et des moyens de multiplexage, Cant étant supérieur ou égal à Ceq.

Il est également important de noter que le récepteur portable selon l'invention permet avantageusement d'utiliser deux antennes ayant des caractéristiques propres différentes. En effet, la détermination des valeurs des éléments de correction dépend également des caractéristiques propres des antennes, il est donc facile de modifier ces éléments de correction pour obtenir une amplitude et un déphasage constant.

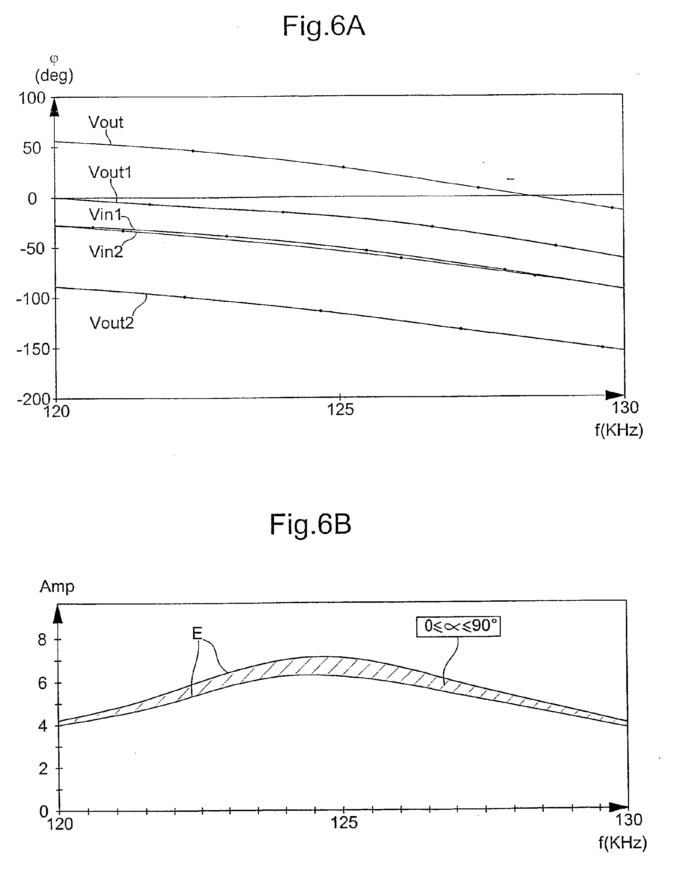

La figure 6A est une simulation du fonctionnement du circuit selon le premier mode de réalisation de la figure 4, représentant l'évolution du déphasage entre les signaux délivrés en sortie des antennes Vin1 et Vin2, les signaux fournis en entrée des moyens de multiplexage Vout1, Vout2 et le signal de sortie Vout.

Les deux circuits déphaseurs sont corrigés par l'ajout de la résistance de correction. Les deux antennes étant choisies identiques dans cet exemple, elles délivrent en sortie des signaux Vin1 et Vin2 parfaitement en phase et d'égale amplitude. Les signaux Vout1 et Vout2 représentent les signaux délivrés en sortie des circuits déphaseurs. Chaque circuit déphaseur effectue un déphasage d'environ +45° ou -45°, suivant la précision dans la détermination des valeurs des éléments de correction. Mais comme il a déjà été souligné, les fonctions de transfert étant réelle pour l'un des sous-circuits et imaginaire pour l'autre, le déphasage relatif entre les deux circuits déphaseurs est constamment de 90° sur la plage de fréquence souhaitée, 120 à 130 KHz dans cet exemple. Le signal Vout délivré en sortie des moyens de multiplexage, ici un soustracteur, correspond à la différence Vout1 - Vout2, entre les signaux délivrés en sortie des circuits déphaseurs, le déphasage du signal Vout par rapport aux signaux d'entrée Vin1 et Vin2 étant de 90°.

La figure 6B est une simulation du fonctionnement du circuit selon le premier mode de réalisation de la figure 4, représentant l'évolution de l'amplitude du signal de sortie en fonction de l'angle entre le signal émis par l'unité d'identification et les antennes de l'identifiant.

Comme il est clairement visible, quel que soit l'angle entre le signal émis par l'unité d'identification et les antennes de l'identifiant, l'amplitude du signal de sortie Vout est comprise dans l'enveloppe E et est donc sensiblement constante.

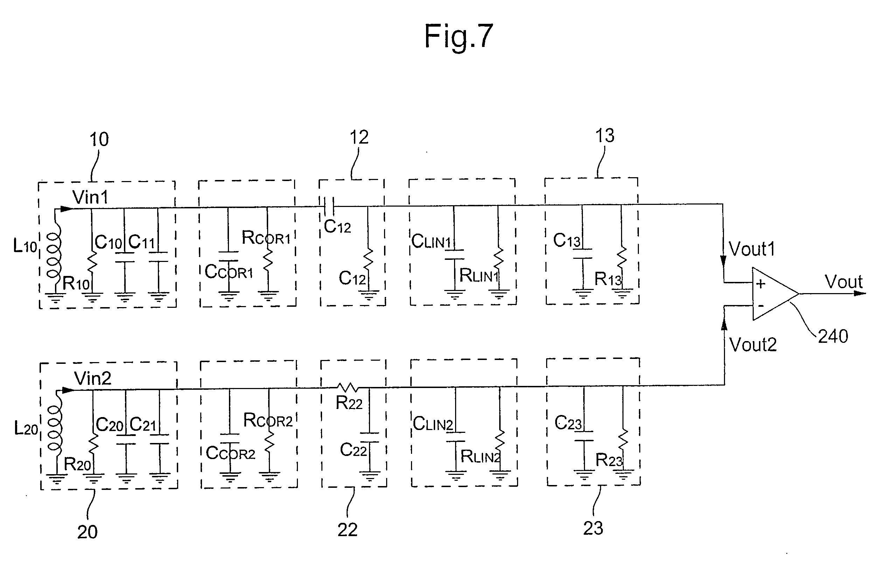

La figure 7 est un schéma électrique de l'invention selon un troisième mode de réalisation, incluant des moyens de linéarisation des moyens de multiplexage.

Le circuit représenté comprend les éléments déjà présents dans le deuxième mode de réalisation de la figure 5, auxquels ont été rajoutés certains éléments parasites considérés comme négligeables dans les premier et deuxième modes ainsi que des moyens de linéarisation des moyens de multiplexage.

Le récepteur portable comprend, comme à la figure 5, deux antennes 10 et 20, pouvant avoir des caractéristiques propres différentes. Chaque antenne 10 et 20 est représentée par une bobine, respectivement L10 et L20, une résistance propre, respectivement R10 et R20, un condensateur propre, respectivement C10 et C20 et un condensateur d'accord, respectivement C11 et C21. Dans le cadre de cette application, les résistances propres R10 et R20 sont négligeables.

En parallèle des deux antennes, on retrouve les moyens de correction déjà exposés à la figure 5. Ces moyens de correction sont constitués chacun d'une résistance de correction Rcor1 et Rcor2 et d'un condensateur de correction Ccor1 et Ccor2.

Les circuits déphaseurs CR et RC, respectivement, 12 et 22 sont constitués par les résistances R12 et R22 et par les condensateurs C12 et C22.

En sortie, les moyens de multiplexage sont représentés par un soustracteur 24, auquel il convient d'ajouter les éléments parasites 13 et 23 présents sur chacune de ses entrées. Les éléments parasites 13 et 23 sont constitués à chaque entrée du soustracteur d'un condensateur C13 et C23 et d'une résistance R13 et R23 parasites. Dans le cadre de cette application, les résistances R13 et R23 parasites sont négligeables. En revanche, les capacités parasites C13 et C23 sont du même ordre de grandeur que celles employées dans les circuits déphaseurs 12 et 22.

Afin de linéariser les variations des valeurs de ces éléments parasites 13 et 23 en fonction notamment des variations de fréquence du signal à recevoir, des moyens de linéarisation sont ajoutés à chaque entrée du soustracteur 24, en parallèle des éléments parasites 13 et 23. De préférence, on utilisera comme pour les moyens de correction des antennes, une résistance de linéarisation Rlin1 et Rlin2 et un condensateur de linéarisation Clin1 et Clin2.

Il est bien entendu que la description n'est donnée qu'à titre d'exemple et que d'autres modes de réalisation, en particulier des moyens de correction, peuvent être prévus par l'homme du métier.

## Revendications

**1.** Récepteur portable, comprenant deux antennes (10, 20) agencées pour recevoir un signal électromagnétique extérieur dans une plage de fréquence donnée et orientées suivant des axes différents, deux circuits déphaseurs (12, 22) étant connectés chacun à une antenne, et des moyens de multiplexage (24) auxquels sont connectés en entrée lesdits circuits déphaseurs et en sortie une unité réceptrice, **caractérisé en ce que** chaque circuit déphaseur associé à la capacité parasite (C13, C23) des moyens de multiplexage est assimilé à un circuit équivalent comprenant une résistance équivalente (Req1, Req2) et une capacité équivalente (Ceq1, Ceq2) en parallèle et **en ce qu'**entre au moins un desdits circuits déphaseurs et l'antenne connectée à ce circuit, ce récepteur comprend également des moyens de correction (Rcor, Ccor), qui comprennent une résistance de correction (Rcor) permettant d'équilibrer lesdites résistances équivalentes desdits circuits équivalents, permettant d'équilibrer les fonctions de transfert (Vout1/Vin1 et Vout2/Vin2) de chacun des sous-circuits comprenant les circuits déphaseurs.

**2.** Récepteur portable selon la revendication 1, **caractérisé en ce que** les moyens de correction comprennent en outre un condensateur de correction (Ccor) permettant d'équilibrer lesdites capacités équivalentes desdits circuits équivalents.

**3.** Récepteur portable selon la revendication 1, **caractérisé en ce que** lesdits premier et second circuits déphaseurs sont pourvus de moyens de correction et **en ce que** lesdits moyens de correction du premier circuit déphaseur comprennent une première résistance de correction (Rcor1) connectée entre la sortie de l'antenne connectée audit premier circuit déphaseur et la masse et **en ce que** lesdits moyens de correction du second circuit déphaseur comprennent une seconde résistance de correction (Rcor2) connectée entre la sortie de l'antenne connectée audit second circuit déphaseur et la masse, lesdites première et deuxième résistances de correction étant données par la formule Rcor = (Rant * Req) / (Req - Rant), où Rant est la résistance d'accord de l'antenne correspondante, et Req est la résistance équivalente du circuit déphaseur correspondant et des moyens de multiplexage, Req étant supérieur ou égal à Rant.

**4.** Récepteur portable selon la revendication 3, **caractérisé en ce que** lesdits moyens de correction desdits premier et second circuits déphaseurs comprennent en outre respectivement, en parallèle desdites première et deuxième résistance de correction, des premier (Ccor1) et second (Ccor2) condensateurs de correction ayant une capacité respective, lesdites capacités des condensateurs de correction étant donnés par la formule suivante Ccor = Cant - Ceq, où Cant est la capacité d'accord de l'antenne correspondante et Ceq est la capacité équivalente du circuit déphaseur correspondant et des moyens de multiplexage, Cant étant supérieur ou égal à Ceq.

**5.** Récepteur portable selon l'une des revendications précédentes, **caractérisé en ce qu'**il comprend en outre des moyens de linéarisation (Rlin1, Rlin2, Clin1 et Clin2) des moyens de multiplexage.

**6.** Dispositif électronique portable formant partie d'un système antivol pour véhicule automobile **caractérisé en ce qu'**il comprend un récepteur selon l'une des revendications précédentes.

**Claims**

**1.** Portable receiver, comprising two antennae (10, 20) designed in order to receive an exterior electromagnetic signal in a given frequency range and orientated according to different axes, two phase shifter circuits (12, 22) being each connected to one antenna, and multiplexing means (24) to which there are connected on the input side said phase shifter circuits and on the output side a receiving unit, **characterised**, and in that each phase shifter circuit associated with the stray capacity (C13, C23) of the multiplexing means is assimilated in an equivalent circuit comprising an equivalent resistance (Req1, Req2) and an equivalent capacity (Ceq1, Ceq2) in parallel, and in that, between at least one of said phase shifter circuits and the antenna connected to this circuit, this receiver likewise comprises correction means (Rcor, Ccor), comprising a correction resistance (Rcor) allowing said equivalent resistances of said equivalent circuits to be balanced, allowing the transfer functions (Vout1/Vin1 and Vout2/Vin2) of each of the subcircuits comprising the phase shifter circuits to be balanced.

**2.** Portable receiver according to claim 1, **characterised in that** the correction means comprise furthermore a correction capacitor (Ccor) allowing said equivalent capacities of said equivalent circuits to be balanced.

**3.** Portable receiver according to claim 1, **characterised in that** said first and second phase shifter circuits are provided with correction means, and **in that** said correction means of the first phase shifter circuit comprise a first correction resistance (Rcor1) connected between the output of the antenna connected to said first phase shifter circuit and earth, and **in that** said correction means of the second phase shifter circuit comprise a second correction resistance (Rcor2) connected between the output of the antenna connected to said second phase shifter circuit and earth, said first and second correction resistances being given by the formula Rcor = (Rant * Req)/ (Req - Rant), where Rant is the tuning resistance of the corresponding antenna, and Req is the equivalent resistance of the corresponding phase shifter circuit and of the multiplexing means, Req being greater than or equal to Rant.

**4.** Portable receiver according to claim 3, **characterised in that** said correction means of said first and second phase shifter circuits comprise furthermore respectively, in parallel with said first and second correction resistance, first (Ccor1) and second (Ccor2) correction capacitors having a respective capacity, said capacities of the correction capacitors being given by the following formula Ccor = Cant - Ceq, where Cant is the tuning capacity of the corresponding antenna and Ceq is the equivalent capacity of the corresponding phase shifter circuit and of the multiplexing means, Cant being greater than or equal to Ceq.

**5.** Portable receiver according to one of the preceding claims, **characterised in that** it comprises furthermore linearisation means (Rlin1, Rlin2, Clin1 and Clin2) of the multiplexing means.

**6.** Portable electronic device forming part of an antitheft system for automotive vehicles, **characterised in that** it comprises a receiver according to one of the preceding claims.

## Patentansprüche

1. Tragbarer Empfänger mit zwei Antennen (10, 20), die dazu ausgebildet sind, ein externes elektromagnetisches Signal in einem vorgegebenen Frequenzbereich zu empfangen und die entlang verschiedener Achsen ausgerichtet sind, ferner umfassend zwei Phasenverschiebungsschaltungen (12, 22), von denen jede mit einer Antenne verbunden ist, und mit Multiplex-Mitteln (24), die eingangs der Phasenverschiebungsschaltungen und ausgangs einer Empfängereinheit verbunden sind, **dadurch gekennzeichnet, dass** jede mit einer Parasitärkapazität (C13, C23) der Multiplex-Mittel zugeordnete Phasenverschiebungsschaltung einer Äquivalenzschaltung gleichgestellt ist, die einen Äquivalenzwiderstand (Req1, Req2) und eine parallele äquivalente Kapazität (Ceq1, Ceq2) aufweist, und wobei zwischen wenigstens einer der Phasenverschiebungsschaltungen und der mit jener Schaltung verbundenen Antenne der Empfänger ferner Korrekturmittel (Rcor, Ccor) aufweist, die einen Korrekturwiderstand (Rcor) aufweisen, die es erlauben, die Äquivalenzwiderstände der Äquivalenzschaltungen auszugleichen und die Transferfunktionen (Vout1/Vin1 und Vout2/Vin2) jeder Unterschaltung auszugleichen, die die Phasenverschiebungsschaltung aufweist.

2. Tragbarer Empfänger nach Anspruch 1, **dadurch gekennzeichnet, dass** die Korrekturmittel unter anderem einen Korrekturkondensator (Ccor) aufweisen, der es erlaubt, die Äquivalenzkapazitäten der Äquivalenzschaltungen auszugleichen.

3. Tragbarer Empfänger nach Anspruch 1, **dadurch gekennzeichnet, dass** die ersten und zweiten Phasenverschiebungsschaltungen mit Korrekturmitteln versehen sind und wobei die Korrekturmittel der ersten Phasenverschiebungsschaltung einen ersten Korrekturwiderstand (Rcor1) aufweisen, der zwischen dem Ausgang der ersten Phasenverschiebungsschaltung und der Masse der Korrekturmittel der zweiten Phasenverschiebungsschaltung verbunden ist, und wobei die Korrekturmittel der zweiten Phasenverschiebungsschaltung einen zweiten Korrekturwiderstand (Rcor2) aufweisen, der zwischen dem Ausgang der mit der zweiten Phasenverschiebungsschaltung verbundenen Antenne und der Masse verbunden ist, wobei der erste und der zweite Korrekturwiderstand durch die Formel Rcor = (Rant x Req) / (Req - Rant) bestimmt ist, wobei Rant der Abgleichwiderstand der entsprechenden Antenne und Req der Äquivalenzwiderstand der korrespondierenden Phasenverschiebungsschaltung und der Multiplexmittel ist und wobei Req größer oder gleich Rant ist.

4. Tragbarer Empfänger nach Anspruch 3, **dadurch gekennzeichnet, dass** die Korrekturmittel der ersten und zweiten Phasenverschiebungsschaltungen unter anderem jeweils parallel zum ersten und zweiten Korrekturwiderstand erste (Ccor1) und zweite (Ccor2) Korrekturkondensatoren aufweisen, die eine entsprechende Kapazität aufweisen, wobei die Kapazität der Korrekturkondensatoren durch die folgende Formel gegeben ist Ccor = Cant - Ceq, wobei Cant die Abgleichkapazität der korrespondierenden Antenne und Ceq die äquivalente Kapazität der korrespondierenden Phasenverschiebungsschaltung und der Multiplexmittel ist, wobei Cant größer oder gleich Ceq ist.

5. Tragbarer Empfänger nach einem der vorhergehenden Ansprüche, **dadurch gekennzeichnet, dass** er unter anderem Linearisierungsmittel (Rlin1, Rlin2, Clin1 und Clin2) der Multiplexmittel aufweist.

6. Elektronischer tragbarer Apparat der Teil eines diebstahlsicheren Systems für Kraftfahrzeuge ist, **dadurch gekennzeichnet, dass** er einen Empfänger nach einem der vorhergehenden Patentansprüche aufweist.

# Fig.1
(ART ANTERIEUR)

# Fig.2
(ART ANTERIEUR)

# Fig.3A
## (ART ANTERIEUR)

# Fig.3B
## (ART ANTERIEUR)

## Fig.4

## Fig.5

## Fig.6A

## Fig.6B

# Fig.7

EP 1 417 777 B1

**EP 1 417 777 B1**

## RÉFÉRENCES CITÉES DANS LA DESCRIPTION

**Documents brevets cités dans la description**

- FR 2792129